Europäisches Patentamt

European Patent Office

Office européen des brevets

(19)

(11)  **EP 1 062 074 B1**

(12)  **FASCICULE DE BREVET EUROPEEN**

(45) Date de publication et mention
de la délivrance du brevet:
**22.12.2004   Bulletin 2004/52**

(21) Numéro de dépôt: **99907693.8**

(22) Date de dépôt: **12.03.1999**

(51) Int Cl.⁷: **B24C 11/00**, C09K 3/14

(86) Numéro de dépôt international:
**PCT/FR1999/000552**

(87) Numéro de publication internationale:
**WO 1999/047307 (23.09.1999 Gazette 1999/38)**

(54)  **PROCEDE DE TRAITEMENT "MECANO-CHIMIQUE" D'UN MATERIAU**

MECHANISCH-CHEMISCHES VERFAHREN ZUR BEHANDLUNG EINES MATERIALS

METHOD FOR MECHANOCHEMICAL TREATMENT OF A MATERIAL

(84) Etats contractants désignés:
**AT BE CH CY DE DK ES FI FR GB GR IE IT LI LU
MC NL PT SE**

(30) Priorité: **13.03.1998  FR 9803116**

(43) Date de publication de la demande:
**27.12.2000   Bulletin 2000/52**

(73) Titulaire: **Halisol Industrial Development
75116 Paris (FR)**

(72) Inventeurs:
• **BRU-MAGNIEZ, Nicole**
**F-75016 PARIS (FR)**
• **KURDYK, Bernard**
**F-75007 Paris (FR)**

• **ROQUES-CARMES, Claude**
**F-25000 Besançon (FR)**
• **BRETON, Pascal**
**F-45510 Tigy (FR)**
• **RICHARD, Joel**
**F-49160 Longues-Jumelles (FR)**

(74) Mandataire: **Hubert, Philippe et al
Cabinet Beau de Loménie
158, rue de l'Université
75340 Paris Cédex 07 (FR)**

(56) Documents cités:
DE-A- 2 809 595      GB-A- 969 535
US-A- 3 869 834      US-A- 4 575 396
US-A- 4 731 125      US-A- 5 261 191
US-A- 5 433 654

## Description

La présente invention concerne un nouveau procédé de traitement mécano-chimique d'un matériau qui permet :

- d'une part, d'améliorer, en une seule opération conduisant à un ancrage ultérieur mécano-chimique, les propriétés de surface d'un matériau, comme en particulier son aptitude à l'adhérence lors d'assemblages ultérieurs ;
- d'autre part, d'améliorer les propriétés superficielles d'usage d'un matériau par la réalisation simple de revêtement à structures composites.

Cette invention trouve une première série d'applications dans tous les domaines où l'on cherche à améliorer les propriétés d'interface d'un matériau en vue de son utilisation avec un autre matériau, en particulier lors d'assemblages, notamment de collage des deux matériaux, ou comblement adhésif de cavités.

Les principaux domaines concernés sont l'odontologie, le domaine biomédical, l'élaboration de produits portés mettant en oeuvre des microtechniques, le domaine de l'industrie automobile et celui de l'avionique.

Dans ce cadre, l'invention s'applique plus particulièrement au traitement de pièces métalliques en vue d'améliorer la cohérence et la réactivité de l'interface entre le métal et une matière polymère constituant généralement la colle ou le revêtement destinée à y être appliquée.

Cette invention trouve une deuxième série d'applications dans tous les domaines où l'on cherche à améliorer les propriétés d'usage superficielles d'un matériau, en particulier d'un matériau revêtu d'un polymère, par l'incorporation dans ce revêtement de charges notamment céramiques, minérales ou métalliques, en réalisant ainsi des structures composites dont le revêtement de polymère constitue la matrice.

Dans ce cadre, l'invention s'applique plus particulièrement à la réalisation des revêtements durs non adhésifs (anti-adhésifs).

Les principaux domaines concernés sont les industries de l'impression, (textile ou papier)celles de l'agro-alimentaire, les industries mécaniques avec des applications dans l'industrie automobile.

Actuellement, dans toutes les opérations de préparation d'une surface en vue de son assemblage par collage avec une autre surface, on procède classiquement par voie séquentielle en réalisant successivement :

- un traitement par voie mécanique, par impacts de particules afin de générer une rugosité destinée à favoriser l'ancrage mécanique ;
- puis, un traitement par voie chimique, par applications successives, notamment par badigeonnage ou pulvérisation sur la surface ainsi traitée mécaniquement, de différents produits chimiques destinés à améliorer les propriétés d'adhésion et d'adhérence de cette surface.

Les procédés de traitement de surface par voie mécanique les plus fréquemment réalisés dans l'industrie ou dans les laboratoires, comme par exemple le sablage, le grenaillage, le billage, etc, sont fondés sur la projection sur la surface à traiter de différents projectiles de préférence à caractère abrasif. Tous ces procédés apportent de bons résultats tout en étant faciles à mettre en oeuvre.

Les projectiles susceptibles d'être utilisés dans le cadre des procédés précités sont de nature variée et généralement caractérisés par leur nature, leur forme, leur dimension, leur granulométrie, leur densité, leur intégrité.

En milieu industriel, les plus couramment utilisés sont des grenailles sphériques ou angulaires en acier, des grenailles rondes ou angulaires en fonte, des grenailles en aluminium ou en cuivre, des microbilles de verre, des grenailles en matériaux céramiques de type alumine ou silice.

En micro-sablage, pour le moment, ce sont des grains d'alumine ou corindon qui sont employés le plus fréquemment. Ces grains présentent des arêtes vives qui garantissent une grande efficacité en termes de macro et de microrugosité de surface.

Un procédé selon le préambule de la revendication 1 est connu du document US-A-4 575 396.

Dans le domaine particulier de l'odontologie où l'on réalise de nombreuses opérations d'assemblage par collage d'un matériau métallique et d'un matériau polymère, on connaît essentiellement deux procédés visant à améliorer la qualité des interfaces métal-polymère. Il s'agit :

- d'une part, d'un procédé mis au point par la société ESPE et connu sous la dénomination "procédé Rocatec®" ; et
- d'autre part, d'un procédé mis au point par la société KULZER et connu sous la dénomination "procédé Silicoater MD®".

Le procédé Rocatec® permet de réaliser un sablage qualifié de "réactif". Ce procédé débute par un premier sablage par des grains d'alumine d'environ 250 µm qui est suivi d'un second sablage utilisant des grains d'alumine de taille sensiblement égale à celle des précédents mais recouverts de micro-grains de silice. Ces deux étapes de sablage sont suivies d'une étape de dépôt au pinceau d'une couche de silane.

Ce procédé qui comporte trois étapes nécessite l'achat d'une unité de sablage spécifique.

Le procédé Silicoater MD® consiste pour l'essentiel à réaliser un dépôt de silice sur les surfaces métalliques par pyrolyse. Ce procédé qui ne comporte pas d'opération de sablage nécessite cependant un équipement spécifique et en particulier une enceinte de cuisson.

Ainsi, les procédés de traitement de surface classiquement utilisés jusqu'à présent en vue de réaliser un assemblage cohésif nécessitent l'utilisation d'équipements spécifiques et/ou sont généralement réalisés par voie séquentielle, ce qui se traduit par des temps de latence relativement importants entre les opérations mécaniques et chimiques, voire entre différentes opérations chimiques successives, qui risquent de perturber la qualité des résultats attendus.

C'est dans ce contexte que les inventeurs ont cherché à mettre au point un procédé de traitement d'un matériau ne nécessitant pas d'équipement spécifique et permettant notamment d'améliorer les propriétés de surface de ce matériau, en une seule étape au cours de laquelle un traitement mécanique par impacts et un traitement chimique seraient réalisés de façon concomitante, ou d'améliorer les propriétés d'usage de ce matériau par la réalisation d'un revêtement superficiel de structures composites.

Le procédé mis au point conformément à la présente invention pour atteindre cet objectif est essentiellement caractérisé par le fait qu'il comprend la projection sur un matériau de particules à structure stratifiée constituées d'un coeur et d'un enrobage comprenant au moins un polymère et éventuellement un agent chimique, dans des conditions telles que lesdites particules et/ou les fragments résultant de leur fracturation s'incrustent et/ou pénètrent dans ledit matériau.

Selon un premier mode de réalisation, ce procédé est destiné à améliorer les propriétés de surface d'un matériau, et en particulier son adhérence lors de son assemblage avec un second matériau, et comprend la projection de particules à structure stratifiée sur la surface dudit matériau, dans des conditions telles que lesdites particules se fragmentent lors de l'impact et s'incrustent dans ledit matériau.

On obtient ainsi en une seule opération, un ancrage, à la surface du matériau à traiter, de fragments des particules projetées, et par conséquent un ancrage de leur enrobage, cette opération étant désignée dans la présente demande par l'expression "ancrage mécano-chimique".

En d'autres termes, la réaction chimique de surface du matériau traité est liée à une incrustation concomitante de la ou des strates des particules stratifiées, cette incrustation améliorant l'adhésion interfaciale.

Plus généralement par l'expression "mécanochimique", on entend qualifier toute opération comportant simultanément une composante mécanique et une composante chimique.

Sous cet aspect, la présente invention permet donc la réalisation, sans temps de latence entre les différentes opérations, d'un traitement de surface d'un matériau regroupant des opérations mécaniques et des opérations chimiques liées à la réactivité des interfaces, ce qui présente un avantage tout particulier par rapport aux traitements toujours séquentiels de l'art antérieur.

Un autre avantage de ce procédé réside dans le fait qu'il ne nécessite pas de matériel spécifique pour sa mise en oeuvre, celle-ci pouvant s'effectuer à l'aide des appareils classiquement utilisés pour les opérations mécaniques de sablage, de micro-sablage, de grenaillage ou de billage.

Ce procédé permet, entre autres, la préparation d'une surface, en particulier d'une surface métallique, sur laquelle on souhaite faire adhérer ou adjoindre un matériau différent, en particulier un matériau polymère.

De nombreux matériaux sont susceptibles d'être traités dans le cadre de ce procédé. On citera en particulier les matériaux métalliques, les céramiques, les polymères ainsi que les tissus calcifiés.

Selon une caractéristique particulière de ce procédé, on utilisera comme projectiles, des particules à structure stratifiée dont le coeur est constitué d'un grain ou d'une bille fait d'un matériau intrinsèquement fragile, comme par exemple une céramique, en particulier d'alumine ou de silice, ou d'un matériau ayant une aptitude naturelle à se fragmenter sous impacts à énergie imposée, comme en particulier une bille d'acier, une bille en fonte ou une bille de verre.

Le coeur des particules à structure stratifiée peut encore être réalisé en une matière plastique, ou en un matériau de sablage traditionnel tel que le kaolin ou les réfractaires.

Selon une autre caractéristique particulière, dans le cas où le second matériau d'assemblage est un polymère, on utilisera comme projectiles, des particules à structure stratifiée dont l'enrobage comporte une ou plusieurs strates comprenant un polymère de famille chimique analogue à celle dudit polymère constituant le second matériau d'assemblage.

Selon un second mode de réalisation, le procédé conforme à la présente invention est destiné à améliorer les propriétés d'usage d'un matériau, par la réalisation de revêtements à structures composites et dans ce cas, la projection des particules à structure stratifiée sera réalisée dans des conditions telles que lesdites particules pénètrent intégralement dans ledit matériau sans se fragmenter sensiblement.

Ce mode de réalisation de l'invention est particulièrement utile pour traiter un matériau polymère, comme en particulier le revêtement d'une structure mono ou multicouches.

Parmi les polymères susceptibles d'être ainsi traités, on peut citer les polytétrafluoroéthylènes (téflon), les silicones (vulcanisant à température ambiante ou à haute température) ou les polyuréthanes.

D'autres matériaux sont susceptibles d'être traités dans le cadre de ce procédé. On citera en particulier les biomatériaux.

Selon une caractéristique particulière de ce procédé, on utilisera comme projectiles, des particules à structure stratifiée dont le coeur est constitué d'un grain ou d'une bille fait d'un matériau céramique, d'un matériau métallique, d'une matière plastique ou encore d'un matériau de sablage traditionnel tel que le kaolin ou les réfractaires.

Des matériaux tels que des carbures, des nitrures, des oxydes, des carbonitrures ou des mélanges de ces composés peuvent être cités comme exemple de matériaux céramiques constitutifs du coeur des projectiles.

Des matériaux à base de cuivre d'aluminium ou de métaux de transition de la série 3d ou 4f peuvent être cités comme exemple de matériaux métalliques constitutifs du coeur des projectiles.

Des alliages de ces métaux sont aussi envisageables.

Selon une autre caractéristique particulière, dans le cas où le matériau à traiter forme un revêtement polymère d'une structure mono ou multicouches, on utilisera comme projectiles des particules à structure stratifiée dont l'enrobage comporte une ou plusieurs strates comprenant un polymère de même nature chimique qu'une strate dudit revêtement.

L'homme de métier comprendra aisément à la lecture de la présente description que la nature et les dimensions des particules à structure stratifiée, la nature du matériau à traiter ainsi que les conditions de la projection desdites particules (en particulier leur vitesse) devront être choisies en fonction des propriétés de surface ou d'usage recherchées.

Par exemple, dans le cas d'un traitement de surface en vue d'un collage, l'homme de métier choisira ces différents paramètres de façon à ce que :

- la taille et la dureté des particules à structure stratifiée soit suffisante pour créer une rugosité de surface favorisant l'ancrage mécanique,
- les constituants des particules à structure stratifiée puissent se rompre sous impact, de manière à ce que, après fracturations ou brisures, une incrustation d'un fragment de la particule et d'une partie de la (ou des) couche(s) de matériau d'enrobage puisse être constatée à la surface du matériau à traiter.

Par exemple encore, dans le cas d'un traitement destiné à réaliser un revêtement composite, l'homme de métier choisira la nature des particules à structure stratifiée et réglera la vitesse de projection dé telle manière que lesdites particules puissent pénétrer à l'intérieur du matériau à traiter, sans se fragmenter.

D'une façon générale, quel que soit le résultat recherché, on choisira avantageusement des particules dont les dimensions sont comprises entre 0,1 µm et 6 mm, de préférence entre 10 µm et 500 µm.

Les particules à structure stratifiée utilisées dans le cadre de l'invention pourront être réalisées par les méthodes classiquement utilisées pour la dragéification de produits particulaires, et en particulier par les techniques de pulvérisation dans un lit gazeux fluidisé ou par les techniques de polymérisation en suspension, couramment utilisées en microencapsulation.

L'enrobage par pulvérisation, dans un lit gazeux fluidisé, est parfaitement codifié. L'objectif étant de maintenir les produits pulvérulents en suspension, dans la zone où le produit encapsulant est pulvérisé, afin d'obtenir un recouvrement total des particules.

Si M est la masse de produit solide pulvérulent à dragéifier, et si m est la masse totale de produits liquides pulvérisés pour réaliser cette opération, le taux théorique d'encapsulation est fourni par la formule :

$$\frac{m}{M + m} \times 100$$

Généralement, un taux de 10 à 20 % est constaté et procure les résultats souhaités.

L'efficacité de l'encapsulation est généralement vérifiée à l'échelle de la Microscopie Electronique à Balayage (MEB).

La technique de pulvérisation dans un lit d'air fluidisé favorise la fabrication de grandes quantités de produits et s'applique particulièrement bien aux particules dont la taille est comprise entre 50 µm et 4 mm.

Cette technique peut être utilisée d'une manière séquentielle pour déposer des strates successives dans le cas d'un enrobage multicouches des particules stratifiées.

Il existe une autre méthode qui permet de créer de véritables liaisons chimiques entre les différentes strates, ou entre le coeur et la strate immédiatement adjacente.

Une réaction de polymérisation peut être effectuée pour favoriser l'ancrage de la première strate avec le matériau sélectionné pour réaliser une seconde strate périphérique.

Le système pourra être reproduit d'une manière récurrente à condition qu'il y ait dans ce cas, des liaisons chimiques entre les couches pénultièmes.

Cette technique sera avantageusement choisie pour les particules de faible taille (≤ 50 µm) et avantageusement pour des particules de taille de l'ordre de 0,5 µm.

Les particules à structure stratifiée pourront être projetées au moyen des dispositifs de projection habituellement utilisés dans les procédés de traitement de surface, notamment des dispositifs à air comprimé ou à turbine.

L'homme de métier déterminera aisément les conditions de fonctionnement de ces dispositifs et en particulier la vitesse de projection des particules, en fonction de l'objectif poursuivi (traitement de surface ou réalisation d'un revêtement composite).

Dans le cas particulier d'un traitement de surface, les particules pourront être projetées en présence d'un liquide porteur de préférence constitué d'eau ou d'une solution aqueuse.

Selon une caractéristique particulière de l'invention, et quel que soit le mode de réalisation envisagé, l'enrobage pourra comporter au moins deux strates, la strate immédiatement au contact du coeur de la particule comprenant éventuellement un agent chimique destiné à augmenter l'adhérence entre ladite strate et ledit coeur, ou entre lesdites strates.

D'une façon plus générale, l'enrobage pourra être constitué d'une strate unique ou d'une pluralité de strates et chaque strate pourra comprendre un ou plusieurs agents chimiques tels que les produits connus comme promoteur d'adhésion ou comme primaire d'adhésion.

Dans ce contexte, on entend par promoteur d'adhésion, toute substance qui permet de modifier la nature chimique d'une surface pour optimiser l'adhésion avec une autre surface, et par primaire d'adhésion, on entend toute substance qui permet de faciliter l'adhésion et l'adhérence d'un adhésif.

Comme exemple de promoteur d'adhésion, on citera les composés généralement désignés dans le métier par le terme "silanes". Il s'agit de molécules bifonctionnelles capables d'échanger des liaisons avec deux matériaux différents et dont l'un est minéral. Ainsi, les alcoxysilanes sont avantageux dans la mesure où :

- certaines fonctions du silane peuvent se condenser, lorsque tel est le cas, avec les groupes hydroxy portés par les surfaces de l'élément constituant le coeur des particules composites pour former des liaisons Si-O-métal,
- les groupements alkyl(acryliques ou méthacryliques) du silane pourront ultérieurement se polymériser, le cas échéant, avec les monomères constitutifs de la couche suivante d'enrobage. C'est le cas en particulier lorsque la particule composite comprend une première couche d'alcoxysilane et une deuxième couche, dite couche périphérique, constituée d'un polymère acrylique.

Selon une variante de réalisation, les particules à structure stratifiée comprendront une couche ou strate externe contenant un primaire d'adhésion et une couche ou strate sous-jacente contenant un promoteur d'adhésion.

De telles particules constituent des produits industriels nouveaux en eux-mêmes.

Bien entendu, le choix aussi bien du promoteur d'adhésion que du primaire d'adhésion dépendra de la nature de l'élément constituant le coeur des particules composites et de l'objectif recherché lors de la mise en oeuvre du procédé.

Ainsi, dans le cas particulier où l'on cherche à réaliser un revêtement composite, il est généralement avantageux d'utiliser comme projectiles des particules comportant une ou plusieurs strates et dont la strate immédiatement au contact du coeur y est fixée par des liaisons chimiques.

Dans le cas particulier où l'on cherche à assembler deux matériaux, par collage au moyen d'une colle acrylique, on choisira des particules composites dont l'enrobage sera constitué ou comportera un composé acrylique dont la formulation sera proche de celle du matériau formant la colle.

La présente invention va maintenant être illustrée par les exemples non limitatifs suivants, descriptifs du collage de pièces en titane en vue d'applications en sciences odontologiques.

EXEMPLES

I Principe et protocole du test utilisé

L'évaluation de l'efficacité de l'opération de préparation mécanique et chimique des surfaces métalliques en titane a été mesurée par un test d'adhérence standardisé par une norme AFNOR (NFT76-114) adaptée aux tailles des échantillons utilisés en art dentaire.

Il s'agit, dans ce cas, d'un test dans lequel un bloc constitué de deux poutres métalliques parallélépipédiques (L = 40 mm, l = 5 mm, e = 2,5 mm) assemblées à l'aide d'un joint d'adhésif est soumis à un écartement imposé.

Cet écartement forcé est obtenu par l'introduction au sein du joint de colle d'un coin en acier de taille calibrée.

L'énergie de rupture (Wr) est alors aisément accessible par le biais de la mesure de la longueur de la fissure suivant la formule classique :

$$\frac{3E\Delta^2 h^3}{16 l^4}$$

où :

E représente le module d'Young du matériau à assembler,

$\Delta$ l'écartement imposé par le coin,

h l'épaisseur des éprouvettes assemblées par collage,

1 la longueur de la fissure.

Ce test servira de base pour tester la qualité des différentes opérations mécano-chimiques réalisées par sablage en procédant selon l'invention (exemples 1 à 6 ci-après). Les résultats sont à comparer avec ceux obtenus selon l'art antérieur (exemples comparatifs de référence).

## II - EXEMPLES COMPARATIFS DE REFERENCE

### II-1 : Résultats obtenus par le seul effet d'impacts de particules non traitées

Les valeurs d'énergie de rupture (Wr) d'une résine acrylique de type PMMA utilisée en odontologie obtenues dans le test décrit ci-dessus en utilisant des particules abrasives non traitées ne générant qu'un ancrage mécanique ont été les suivantes :

- particules d'alumine de 50 μm : Wr = 18 J/m$^2$
- particules d'alumine de 125 μm : Wr = 33 J/m$^2$
- particules d'alumine de 250 μm : Wr = 36 J/m$^2$
- particules de silice de 250 μm : Wr = 110 J/m$^2$.

### II-2 : Résultats obtenus dans des opérations de sablage suivies de dépôt au pinceau de produits de type promoteur et primaire d'adhérence

1) Pour les opérations où la préparation des surfaces est réalisée d'une manière séquentielle par sablage avec des grains d'Al$_2$O$_3$ de 250 μm puis badigeonnage des produits de type silane (promoteur) et polymère acrylique (primaire), l'ordre de grandeur de Wr est de :

$$Wr = 130 \text{ J/m}^2$$

2) Pour les mêmes opérations effectuées à l'aide de grains de silice 250 μm suivies d'une application au pinceau des mêmes produits chimiques que ceux décrits précédemment la valeur moyenne suivante a été obtenue :

$$Wr = 250 \text{ J/m}^2$$

3) Pour cette même granulométrie de silice 250 μm, l'application au pinceau du silane (promoteur) seul fournit comme valeur :

$$Wr = 200 \text{ J/m}^2$$

4) L'application au pinceau de polymère acrylique sans sous-couche de silane sur une surface préalablement sablée avec des grains de silice de 250 μm bruts de fabrication fournit comme valeur :

$$Wr = 137 \text{ J/m}^2$$

5) Le sablage avec des grains d'alumine de 250 μm d'une surface préalablement enduite au pinceau d'un dépôt de silane puis de primaire tous deux liquides laissés évaporés fournit comme valeur :

$$Wr = 75 \text{ J/m}^2$$

6) Le sablage avec des grains d'alumine de 250 μm d'une surface préalablement enduite au pinceau d'un dépôt de silane puis de primaire tous deux à l'état liquide conduit à une énergie de rupture :

$$Wr = 135 \text{ J/m}^2$$

7) Résultats obtenus en utilisant le principe séquentiel commercialisé par la société ESPE (procédé ROCATEC) :

$$Wr = 180 \text{ J/m}^2.$$

## III - EXEMPLES 1 à 11 selon l'invention

### Exemple 1 : Particules d'alumine de taille égale à 250 μm microencapsulées par voie physique en vue de réaliser un sablage "mécano-chimique" performant en collage

500 g de particules d'alumine de forme polyédrique de taille moyenne égale à 250 μm ont été soumis à des opérations de microencapsulation par voie physique et ce, de manière à obtenir deux strates successives :

- strate 1 (strate interne) constituée par un dépôt, à 85°C, de méthacrylate de triméthoxysilylpropyl (promoteur) qui conduit à un dépôt théorique de 9,0 %
- strate 2 (strate extérieure) dépôt à 35°C de 225 g d'EUDRAGIT® NE 30 D (primaire), c'est-à-dire d'un copolymère d'acrylate d'éthyle et de méthacrylate de méthyle en dispersion à 30 % dans l'eau avec un tensioactif (1,5 % de Nonoxynol 100).

Le dépôt théorique est dans ce cas de 12 %.
En règle générale, lors des opérations de microencapsulation par voie physique, les conditions suivantes ont été utilisées :

- débit d'air entraînant les particules solides : de 50 à 80 m$^3$/h ;
- pression d'atomisation : de l'ordre de 2 bars ;
- vitesse de pulvérisation au niveau de la buse : estimée à 5 ml/mn.

Les particules ainsi microencapsulées ont servi au sablage mécano-chimique de lots formés chacun de 20 éprouvettes en titane (T40) de dimensions 40 x 5 x 2,5 mm.

Les tests DCB ont donné comme valeur moyenne :

$$Wr = 360 \ J/m^2$$

Exemple 2 : Particules d'alumine de taille égale à 250 μm microencapsulées par voie physique en vue de réaliser un sablage mécano-chimique performant en collage

La même démarche expérimentale que celle de l'exemple 1, avec les mêmes taux de recouvrement mais une strate 2 constituée d'un autre acrylate EUDRAGIT® L 30D conduit lors des tests DCB à une valeur moyenne de :

$$Wr = 350 \ J/m^2$$

Exemple 3 : Particules d'alumine de taille égale à 125 μm microencapsulées par voie physique en vue de réaliser un sablage mécano-chimique performant en collage.

Le même protocole que celui décrit dans l'exemple 1 a été réalisé sur des grains d'alumine de taille moyenne égale à 125 μm :

- le dépôt théorique dans la strate 1 est égal à 10 %,
- le dépôt théorique dans la strate 2 est égal à 11 %.

Les tests DCB sur des lots de 20 éprouvettes ont fourni comme valeur moyenne :

$$Wr = 280 \ J/m^2$$

Exemple 4 : Particules d'alumine de taille égale à 125 μm microencapsulées par voie physique en vue de réaliser un sablage mécano-chimique performant en collage

Le même protocole que celui décrit à l'exemple 2 fournit pour des grains d'alumine de 125 μm une valeur moyenne de :

$$Wr = 330 \ J/m^2$$

Exemple 5 : Particules de silice de taille moyenne égale à 250 μm microencapsulées par voie physique en vue de réaliser un sablage mécano-chimique performant en collage.

La même démarche expérimentale que celle décrite dans l'exemple 1 a été cette fois adaptée à la microencapsulation par voie physique de particules de silice de taille moyenne égale à 250 μm :

- le dépôt théorique de la strate 1 est de 10 %,
- le dépôt de la strate 2 est de 13,4 %.

L'énergie de rupture associée, mesurée sur les 10 couples d'éprouvettes en titane, est de :

$$Wr = 385 \ J/m^2$$

Exemple 6 : Particules de silice de taille moyenne égale à 125 μm microencapsulées par voie physique en vue de réaliser un sablage mécano-chimique performant en collage.

Dans cet exemple, les particules de silice de taille égale à 125 μm ont été microencapsulées uniquement par le même silane que celui décrit dans l'exemple 1.

Le sablage mécano-chimique effectué avec ce sable enrobé avec une seule strate a fourni sur 10 couples d'éprouvettes collées, la valeur moyenne suivante :

$$Wr = 275 \ J/m^2$$

Exemple 7 : Particules d'alumine de taille moyenne égale à 125 μm microencapsulées par voie physique en vue de réaliser un sablage mécano-chimique performant en collage.

Dans cet exemple, les particules d'alumine de taille moyenne égale à 125 μm ont été microencapsulées d'une strate unique faite d'un composé acrylique (EUDRAGIT® 30 D55) sans dépôt de silane préalable.

Le sablage mécano-chimique effectué avec ces particules a fourni, sur 10 couples d'éprouvettes collées, la valeur moyenne suivante :

$$Wr = 320 \ J/m^2$$

Exemple 8 : Particules d'alumine de taille moyenne égale à 250 μm microencapsulées par voie physique en vue de réaliser un sablage mécano-chimique performant en collage.

Dans cet exemple, les particules d'alumine de taille moyen égale à 250 μm ont été microencapsulées d'une strate unique faite d'un composé acrylique (EUDRAGIT® 30 D55) sans dépôt de silane préalable.

Le sablage mécano-chimique effectué avec ces particules a fourni, sur 10 couples d'éprouvettes collées, la valeur moyenne suivante :

$$Wr = 365 \text{ J/m}^2$$

Exemple 9 : Particules d'alumine de taille moyenne égale à 0.5 µm microencapsulées par voie chimique en vue de réaliser un sablage mécano-chimique performant en collage.

Le protocole expérimental est cette fois le suivant :

La poudre d'alumine est préalablement séchée sous vide afin d'éliminer les molécules d'eau présentes à la surface susceptibles de gêner le greffage du silane (promoteur) sélectionné dans l'exemple 1.

Le greffage du silane à l'alumine est effectué par chauffage à reflux d'un mélange alumine, silane et toluène anhydre.

L'alumine ainsi modifiée est ensuite purifiée par extraction, puis séchée sous vide.

L'encapsulation, proprement dite, se réalise par polymérisation radicalaire en suspension de méthacrylate de méthyle (MMA) autour des particules minérales modifiées en utilisant le peroxyde de benzoyle comme amorceur et le PVA comme colloïde protecteur.

Tous les réactifs (eau, PVA, amorceur, MMA, $Al_2O_3$) sont introduits dans un réacteur chauffé à 90°C dans lequel un agitateur de type ancre tourne à la vitesse de 750 tours/min.

Après trois heures de réaction, le produit est récupéré, lavé à l'eau chaude, filtré et séché à l'étuve pendant une journée.

Les valeurs d'énergie de rupture associées sont pour 20 éprouvettes testées de :

$$Wr = 255 \text{ J/m}^2$$

Exemple 10 : Particules d'alumine de taille moyenne, égale à 0,5 µm microencapsulées par voie chimique, en vue de réaliser un sablage mécano-chimique performant en collage.

Dans cet exemple, seule l'encapsulation par le procédé de polymérisation en suspension, décrit dans l'exemple 9, a été réalisé sans mise en oeuvre préalable d'une silanisation (promoteur).

Les données afférentes fournissent, sur 10 lots d'éprouvettes accouplées, la valeur expérimentale moyenne :

$$Wr = 140 \text{ J/m}^2$$

Exemple 11 : Particules d'alumine de taille moyenne égale à 100 µm microencapsulées par voie physique à l'aide d'une enveloppe de PMMA en vue de réaliser un sablage mécano-chimique performant en collage.

Dans cet exemple les particules d'alumine de taille moyenne égale à 100 µm ont été microencapsulées d'une strate unique faite d'une émulsion dans l'eau de PMMA (polyméthylméthacrylate) stabilisée par différents tensio-actifs.

Pour ce faire, il a été tout d'abord réalisé une solution de 50 g de PMMA dans 250 ml d'acétate d'éthyle et ce, par agitation à température ambiante.

Des masses de 0,25 g de tensio-actifs (Montanox® (SEPPIC), Triton® (Fluka), Pluronic® (Fluka), copolymère bloc PMMA-POE) ont été simultanément dissoutes dans 25 g d'eau sous agitation à une température ne dépassant pas 40°C.

L'émulsion de PMMA stabilisée par les tensioactifs servant à la microencapsulation est effectuée à l'aide d'un ultra-turrax (24000 tr/min) entraînant la solution aqueuse de tensio-actif. Dans cette solution soumise à agitation, on incorpore, goutte à goutte, 25 g de la solution de PMMA dans l'acétate d'éthyle à la solution précédente.

Après ajout de la solution de PMMA, l'émulsion est homogénéisée pendant 15 minutes à l'aide de l'ultra-turrax sous une vitesse de rotation de 24000 tr/min.

Chaque émulsion ainsi préparée, en fonction du tensio-actif retenu, est versée dans une éprouvette graduée fermée.

La stabilité de l'émulsion est évaluée par observation visuelle. Les résultats obtenus sont regroupés sur le tableau joint.

| TENSIO-ACTIF | TEMPS DE STABILITE |
|---|---|
| Triton®X-45 (Fluka) | 3 heures |
| Montanox®65 (SEPPIC) | 12 heures |
| Montanox®60 (SEPPIC) | 4 jours |
| Montanox®80 (SEPPIC) | 5 jours |
| Triton® X-405 (Fluka) | > 8 jours |
| Pluronic® F68 (Fluka) | > 8 jours |
| PMMA-b-POE | > 8 jours |

Sur ces bases, les particules ont été microencapsulées préférentiellement à l'aide d'émulsions stabilisées à l'aide du Triton@ X-405 ou du Pluronic® F68.

Le sablage mécano-chimique effectué avec ces particules a fourni, sur 20 couples d'éprouvettes collées, la valeur moyenne suivante :

$$Wr = 350 \text{ J/m}^2$$

et ce, quelle que soit l'émulsion utilisée.

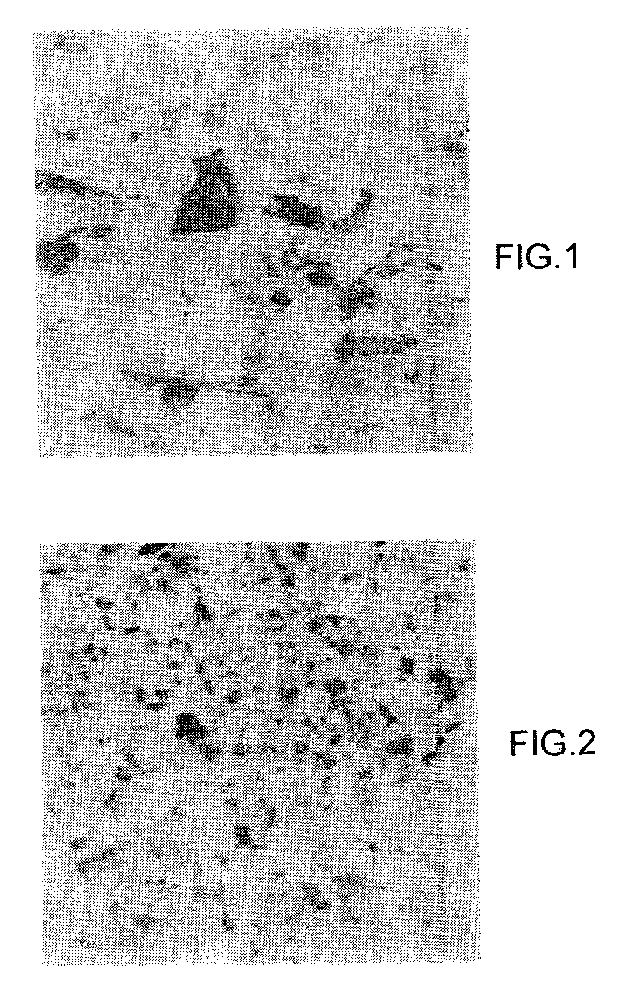

Les figures 1 et 2 illustrent le procédé mis au point conformément à la présente invention, dans son premier mode de réalisation destiné à améliorer les propriétés de surface d'un matériau.

Plus précisément :

- la figure 1 est une image obtenue par spectrométrie de cathodoluminescence et montre l'incrustation de fragments de matériau céramique de type alumine résultant de la projection de granules de taille moyenne égale à 250 μm sur une cible de titane ;
- la figure 2 est une image semblable à la figure 1 après projection de granules de de même type de taille moyenne égale à 50 μm sur une cible de titane.

Des analyses par spectrométrie ESCA (XPS) ont confirmé la présence de matériau polymère à la surface du titane formant cible après projection de granules d'alumine microencapsulées avec une enveloppe de matériau acrylique.

Comme le montrent ces figures, le procédé conforme à la présente invention permet donc de provoquer d'une manière concomitante une action mécano-chimique consistant :

- d'une part, en la création de rugosités de surface par incrustation de fragments de particules retenus à la surface de la cible en raison de leur fragilité intrinsèque ; et
- d'autre part, l'incrustation simultanée de fragments de matériau polymère permettant par exemple l'adhésion lors d'opérations ultérieures de collage.

Comme on le comprend, le procédé qui vient d'être décrit peut trouver de nombreuses applications.

Outre celles citées en introduction, on peut encore mentionner le sablage des façades d'immeubles en vue d'améliorer l'adhérence de revêtements ou de peintures à propriétés semi-perméables, ou bien encore en vue de minimiser les inscriptions de type "graffitis" par la réalisation de revêtements "anti-graffitis" adhérents.

## Revendications

1. Procédé de traitement mécano-chimique d'un matériau, comprenant, en vue d'améliorer ses propriétés de surface par ancrage mécano-chimique, comme en particulier son adhérence lors d'assemblages ultérieurs, ou en vue d'améliorer ses propriétés d'usage par réalisation de revêtements superficiels à structure composite, la projection sur ledit matériau de particules à structure stratifiée constituées d'un coeur et d'un enrobage comprenant au moins un polymère, **caractérisé en ce qu'**il se passe dans des conditions telles que lesdites particules et/ou les fragments résultant de leur fracturation s'incrustent et/ou pénètrent dans ledit matériau et, éventuellement, que l'enrobage des particules comprend un agent chimique.

2. Procédé selon la revendication 1, destiné à améliorer les propriétés de surface d'un matériau et en particulier son adhérence lors de son assemblage avec un second matériau, **caractérisé en ce que** les particules précitées à structure stratifiée sont projetées sur ledit matériau à traiter, éventuellement en présence d'un liquide porteur, dans des conditions telles que lesdites particules se fragmentent lors de l'impact et s'incrustent dans ledit matériau.

3. Procédé selon la revendication 2, **caractérisé en ce que** le matériau à traiter est un matériau métallique, une céramique, un polymère ou un tissu calcifié, de préférence un matériau métallique.

4. Procédé selon la revendication 2 ou 3, **caractérisé en ce que** le coeur des particules précitées à structure stratifiée est constitué d'un grain ou d'une bille fait d'un matériau intrinsèquement fragile, comme par exemple une céramique, en particulier d'alumine ou de silice, ou d'un matériau ayant une aptitude naturelle à se fragmenter sous impacts, comme en particulier une bille d'acier, une bille en fonte ou une bille en verre.

5. Procédé selon l'une des revendications 2 à 4, **caractérisé en ce que** le second matériau d'assemblage est un polymère, et **en ce que** l'enrobage des particules à structure stratifiée précitées comporte une ou plusieurs strates comprenant un polymère de famille chimique analogue à celle dudit polymère constituant le second matériau d'assemblage.

6. Procédé selon la revendication 1, destiné à améliorer les propriétés d'usage d'un matériau par réalisation de revêtements à structure composite à propriétés principales dures et anti-adhésives, **caractérisé en ce que** les particules à structure stratifiée précitées sont projetées sur ledit matériau à traiter dans des conditions telles que lesdites particules pénètrent intégralement dans ledit matériau sans se fragmenter sensiblement.

7. Procédé selon la revendication 6, **caractérisé en ce que** le matériau à traiter est un matériau polymère, ou un biomatériau, de préférence un matériau polymère choisi parmi les polymères de type polytétrafluoroéthylène (téflon), les silicones ou les polyuréthanes.

8. Procédé selon la revendication 6 ou 7, **caractérisé en ce que** le coeur des particules à structure stratifiée précitées est constitué d'un grain ou d'une bille fait d'un matériau céramique, en particulier choisi parmi les carbures, nitrures, oxydes, carbonitrures et leurs mélanges, d'un matériau métallique comme à base de cuivre et d'aluminium ou de métaux de transition de la série 3d et 4f ou d'alliages de ces métaux, d'une matière plastique ou encore d'un matériau de sablage traditionnel tel que le kaolin ou les réfractaires.

9. Procédé selon l'une des revendications 6 à 8, **caractérisé en ce que** le matériau à traiter forme un revêtement polymère d'une structure mono ou multicouches et **en ce que** l'enrobage des particules à structure stratifiée précitées comporte une ou plusieurs strates comprenant un polymère de même nature que ledit revêtement.

10. Procédé selon la revendication 5 ou 9, **caractérisé en ce que** l'enrobage précité comporte au moins deux strates, la strate immédiatement au contact du coeur comprenant au moins un agent chimique destiné à augmenter l'adhérence entre ladite strate et ledit coeur, ou entre lesdites strates.


**Patentansprüche**

1. Verfahren zur mechanochemischen Behandlung eines Materials, umfassend im Hinblick auf eine Verbesserung seiner Oberflächeneigenschaften durch mechanochemische Verankerung, wie insbesondere seiner Haftung bei späterem Zusammenfügen, oder im Hinblick auf eine Verbesserung seiner Verwendungseigenschaften durch Erzeugen von Oberflächenbeschichtungen mit Verbundstruktur, das Aufsprühen von Teilchen mit einer Schichtstruktur, die aus einem Kern und einem Überzug, der mindestens ein Polymer umfaßt, gebildet sind, auf das Material, **dadurch gekennzeichnet, daß** es unter derartigen Bedingungen erfolgt, daß die Teilchen und/oder die Fragmente, die aus deren Bruch resultieren, sich in dem Material festsetzen und/oder in das Material eindringen, und daß der Überzug der Teilchen gegebenenfalls ein chemisches Mittel umfaßt.

2. Verfahren nach Anspruch 1, welches zur Verbesserung der Oberflächeneigenschaften eines Materials und insbesondere seiner Haftung bei seinem Zusammenfügen mit einem zweiten Material bestimmt ist, **dadurch gekennzeichnet, daß** die vorgenannten Teilchen mit Schichtstruktur auf das zu behandelnde Material, gegebenenfalls in Gegenwart eines flüssigen Trägers, unter derartigen Bedingungen gesprüht werden, daß die Teilchen beim Aufprall brechen und sich in dem Material festsetzen.

3. Verfahren nach Anspruch 2, **dadurch gekennzeichnet, daß** das zu behandelnde Material ein metallisches Material, eine Keramik, ein Polymer oder ein calcifiziertes Gewebe, vorzugsweise ein metallisches Material, ist.

4. Verfahren nach Anspruch 2 oder 3, **dadurch gekennzeichnet, daß** der Kern der vorgenannten Teilchen mit Schichtstruktur aus einem Korn oder Kügelchen aus einem inhärent zerbrechlichen Material, wie z.B. einer Keramik, insbesondere Aluminiumoxid oder Siliciumdioxid, oder aus einem Material mit natürlicher Fähigkeit, beim Aufprall zu brechen, wie insbesondere einem Stahlkügelchen, einem Gußeisenkügelchen oder einem Glaskügelchen, besteht.

5. Verfahren nach einem der Ansprüche 2 bis 4, **dadurch gekennzeichnet, daß** das zweite Material zum Zusammenfügen ein Polymer ist, und daß der Überzug der vorgenannten Teilchen mit Schichtstruktur ein oder mehrere Schichten aufweist, die ein Polymer aus der gleichen chemischen Gruppe wie das Polymer, das das zweite Material zum Zusammenfügen darstellt, umfaßt.

6. Verfahren nach Anspruch 1, welches zur Verbesserung der Verwendungseigenschaften eines Materials durch Erzeugen von Beschichtungen mit Verbundstruktur mit im wesentlichen harten und nicht haftenden Eigenschaften bestimmt ist, **dadurch gekennzeichnet, daß** die vorgenannten Teilchen mit Schichtstruktur auf das zu behandelnde Material unter derartigen Bedingungen aufgesprüht werden, daß die Teilchen im Ganzen in das Material eindringen, ohne spürbar zu brechen.

7. Verfahren nach Anspruch 6, **dadurch gekennzeichnet, daß** das zu behandelnde Material ein Polymermaterial oder ein biologisches Material, vorzugsweise ein Polymermaterial, ausgewählt aus Polymeren vom Polytetrafluorethylen-Typ (Teflon), Siliconen oder Polyurethanen, ist.

8. Verfahren nach Anspruch 6 oder 7, **dadurch gekennzeichnet, daß** der Kern der vorstehenden Teilchen mit Schichtstruktur aus einem Korn oder Kügelchen aus einem keramischen Material, insbesondere ausgewählt aus Carbiden, Nitriden, Oxiden, Carbonitriden und deren Gemischen, einem metallischen Material, wie z.B. auf Basis von Kupfer und Aluminium oder Übergangsmetallen aus der Gruppe 3d und 4f oder Legierungen dieser Metalle, einem Kunststoff oder auch einem Material, das herkömmlicherweise beim Sandstrahlen eingesetzt wird, wie z.B. Kaolin oder feuerfesten Materialien, besteht.

9. Verfahren nach einem der Ansprüche 6 bis 8, **dadurch gekennzeichnet, daß** das zu behandelnde Material eine Polymerbeschichtung mit einer Ein- oder Mehrschichtstruktur bildet, und daß das der Überzug der vorgenannten Teilchen mit Schichtstruktur ein oder mehrere Schichten aufweist, die ein Polymer mit der gleichen Beschaffenheit wie die Beschichtung umfassen.

10. Verfahren nach Anspruch 5 oder 9, **dadurch gekennzeichnet, daß** der vorgenannte Überzug mindestens zwei Schichten aufweist, wobei die Schicht, die in unmittelbarem Kontakt mit dem Kern steht, mindestens ein chemisches Mittel umfaßt, das dazu bestimmt ist, die Haftung zwischen der Schicht und dem Kern oder zwischen den Schichten zu erhöhen.

## Claims

1. A method of mechano-chemically treating a material, comprising with a view to improving its surface properties by mechano-chemical anchoring, such as, in particular, its adherence during subsequent assemblings, or with a view to improving its properties of use by producing surface coatings having composite structure, projecting onto said material particles having stratified structure constiting of a core and of a particle coating comprising at least one polymer, **characterized in that** it takes place under conditions such that said particles and/or the fragments resulting from their fracturing become encrusted in and/or penetrate into said material, and, optionally, that the coating of the particle comprises a chemical agent.

2. The method according to claim 1, intended to improve the surface properties of a material and in particular its adherence during its assembling with a second material, **characterised in that** the particles mentioned above having stratified structure are projected onto said material to be treated, optionally in the presence of a liquid carrier, under conditions such that said particles fragment during impact and become encrusted in said material.

3. The method according to claim 2, **characterised in that** the material to be treated is a metallic material, a ceramic, a polymer or a calcified material, preferably a metallic material.

4. The method according to claim 2 or 3, **characterised in that** the core of the particles mentioned above having stratified structure consists of a grain or bead made from an intrinsically fragile material, such as, for example, a ceramic, in particular an alumina or silica-based ceramic, or from a material having a natural aptitude to fragment upon impact, such as, in particular, a steel bead, a cast iron bead or a glass bead.

5. The method according to one of claims 2 to 4, **characterised in that** the second assembling material is a polymer, and **in that** the coating of the particles mentioned above having stratified structure comprises one or more strata comprising a polymer of chemical family which is analogous to that of said polymer constituting the second assembling material.

6. The method according to claim 1, intended to improve the properties of use of a material by carrying out coverings having composite structure having hard and anti-adhesive main properties, **characterised in that** the particles mentioned above having stratified structure are projected onto said material to be treated under conditions such that said particles fully penetrate into said material without significantly fragmenting.

7. The method according to claim 6, **characterised in that** the material to be treated is a polymer material, or a biomaterial, preferably a polymer material selected from polymers of the type polytetrafluoroethylene (teflon), silicones or polyurethanes.

8. The method according to claim 6 or 7, **characterised in that** the core of the particles mentioned above having stratified structure consists of a grain or bead made from a ceramic material, in particular selected from carbides, nitrides, oxides, carbonitrides and their mixtures, from a metallic material such as one based on copper and aluminium, or transition metals from the 3d and 4f series or alloys of these metals, from a plastic material or even from a traditional sandblasting material such as kaolin or refractory materials.

9. The method according to one of claims 6 to 8, **characterised in that** the material to be treated forms a polymer surface coating having a mono- or multilayered structure, and **in that** the coating of the particles mentioned above having stratified structure comprises one or more strata comprising a polymer of the same nature as said formed polymer surface coating.

10. The method according to claim 5 or 9, **characterised in that** the particle coating mentioned above comprises at least two strata, the stratum immediately in contact with the core comprising at least one chemical agent intended to increase the adherence between said stratum and said core, or between said strata.

FIG.1

FIG.2